# EUROPÄISCHE PATENTSCHRIFT

(11) **EP 0 706 467 B1**
(45) Veröffentlichungstag und Bekanntmachung des Hinweises auf die Patenterteilung: **05.01.2000**
(21) Anmeldenummer: 94918862.7
(22) Anmeldetag: 10.06.1994
(51) Int. Cl.: B60T 13/14, G05D 16/10

(54) **HYDRAULISCHES DRUCKREGELVENTIL, INSBESONDERE HYDRAULISCHES FREMDKRAFTBREMSVENTIL**
HYDRAULIC PRESSURE REGULATING VALVE, ESPECIALLY A HYDRAULIC POWER BRAKE VALVE
SOUPAPE HYDRAULIQUE REGULATRICE DE PRESSION, NOTAMMENT SOUPAPE HYDRAULIQUE DE SERVOFREIN

(30) Priorität: 07.07.1993 DE 4322634
(43) Veröffentlichungstag der Anmeldung: 17.04.1996
(73) Patentinhaber: Mannesmann Rexroth Aktiengesellschaft, 97816 Lohr am Main (DE)
(72) Erfinder: MIES, Hubert, D-97846 Partenstein (DE)
(86) Internationale Anmeldenummer: EP9401892
(87) Internationale Veröffentlichungsnummer: WO9501899

(56) Entgegenhaltungen:
- EP-A- 0 041 020
- DE-A- 3 039 002
- DE-B- 1 956 258
- GB-A- 2 051 985

## Beschreibung

Die Erfindung geht aus von einem hydraulisches Druckregelventil, insbesondere von einem hydraulischen Fremdkraftbremsventil, das die Merkmale aus dem Oberbegriff des Anspruches 1 aufweist.

Ein als Fremdkraftbremsventil ausgebildetes Druckregelventil ist aus der DE 35 45 975 A1 bekannt. Bei diesem Ventil ist in einem Ventilgehäuse eine Ventilbohrung vorhanden, in die in einem axialen Abstand zueinander ein Versorgungskanal, ein Bremsdruckkanal als Verbraucherkanal und ein Tankkanal münden, wobei der Versorgungskanal zwischen dem Bremsdruckkanal und dem Tankkanal angeordnet ist. Weiterhin ist bei dem bekannten Fremdkraftbremsventil in der Ventilbohrung ein Regelkolben in eine erste Richtung in eine durch einen Anschlag definierte erste Endstellung, in der der Versorgungskanal und der Bremsdruckkanal miteinander verbunden sind, und in eine zweite Richtung in eine zweite Endstellung verstellbar, in der der Bremsdruckkanal mit dem Tankkanal verbunden ist. Dazwischen kann der Regelkolben eine Regelstellung einnehmen, in der er den Bremsdruckkanal mit Nullüberdeckung oder einer geringen positiven Überdeckung vom Versorgungskanal und vom Tankkanal trennt. Bei dem bekannten Fremdkraftbremsventil besitzt der Regelkolben eine zentrale Längsbohrung, in die eine Querbohrung mündet, deren Durchmesser dem lichten Abstand zwischen dem Versorgungskanal und dem Tankkanal entspricht und die sich in der Regelstellung des Regelkolbens in dem Bereich zwischen diesen beiden Kanälen befindet. Die Längsbohrung des Regelkolbens ist im Bereich des Bremsdruckkanals durch eine weitere Bohrung wieder nach außen in einen mit einer Eindrehung versehenen Bereich des Regelkolbens geführt. Außerdem ist die Längsbohrung auch an der Stirnseite des eingedrehten Abschnitts des Regelkolbens offen. Der Bremsdruckkanal wird über die Querbohrungen und die Längsbohrungen bei einer Bewegung des Regelkolbens aus der Regelstellung heraus in die eine Richtung mit dem Versorgungskanal und bei einer Bewegung in die andere Richtung mit dem Tankkanal verbunden.

Ein als Fremdkraftbremsventil ausgebildetes und die Merkmale aus dem Oberbegriff des Patentanspruchs 1 aufweisendes Druckregelventil ist aus der GB-A-2 051 985 bekannt. Auch bei diesem Ventil ist in einem Ventilgehäuse eine Ventilbohrung vorhanden, in die in einem axialen Abstand zueinander ein Versorgungskanal, ein Bremsdruckkanal als Verbraucherkanal und ein Tankkanal münden, wobei hier der Bremsdruckkanal zwischen dem Versorgungskanal und dem Tankkanal angeordnet ist. Zwischen dem Bremsdruckkanal und dem Versorgungskanal befindet sich ein Ventilbohrungsabschnitt mit einer dem Abstand zwischen den beiden Kanälen entsprechenden axialen Länge. Weiterhin ist in Übereinstimmung mit dem Oberbegriff des Patentanspruchs 1 in der Ventilbohrung ein Regelkolben in eine erste Richtung in eine durch einen Anschlag definierte erste Endstellung, in der der Versorgungskanal und der Bremsdruckkanal miteinander verbunden sind, und in eine zweite Richtung in eine zweite Endstellung verstellbar, in der der Bremsdruckkanal mit dem Tankkanal verbunden ist. Dazwischen kann der Regelkolben eine Regelstellung einnehmen, in der er den Bremsdruckkanal vorliegend mit einer geringen positiven Überdeckung vom Versorgungskanal und vom Tankkanal trennt. Bei dem aus der GB-A-2 051 985 bekannten Fremdkraftbremsventil besitzt der Regelkolben als radiale Aussparung eine Ringnut, die unabhängig von der Position des Regelkolbens immer zum Versorgungskanal hin offen ist, deren Breite entsprechend der positiven Überdeckung geringfügig kleiner als der lichte Abstand zwischen dem Versorgungskanal und dem Tankkanal ist und die sich in der Regelstellung des Regelkolbens in dem Bereich zwischen dem Versorgungskanal und dem Tankkanal befindet. Der Bremsdruckkanal wird bei einer Bewegung des Regelkolbens aus der Regelstellung heraus in die eine Richtung mit dem Versorgungskanal und bei einer Bewegung in die andere Richtung mit dem Tankkanal verbunden.

In Fremdkraftbremsanlagen werden je nach der auf das Fremdkraftbremsventil ausgeübten äußeren Kraft Bremadrücke bis in den Bereich von 100 bar aufgebaut. Charakteristisch ist dabei, daß ein Graph, in dem die zum Druckaufbau benötigte Zeit gegen den Enddruck aufgetragen ist, einen Bereich mit einer starken Krümmung zeigt. Für Bremsdrücke, die oberhalb dieses Bereichs liegen, ist die Zeit für den Druckaufbau wenigstens annähernd immer die gleiche. Unterhalb des Bereichs nimmt die Zeit für den Druckaufbau zu kleineren Bremsdrücken stark zu. Dies ist darauf zurückzuführen, daß einerseits die über das Ventil fließende Druckmittelmenge nur wenig vom aufzubauenden Bremsdruck abhängt und daß andererseits für niedrige Enddrücke der Regelkolben nicht mehr in seine erste Endstellung mit dem maximalen Durchflußquerschnitt gelangt. Etwa die gleiche Druckmittelmenge muß dann über einen Querschnitt fließen, der kleiner ist als für höhere Enddrücke. Eine schnelle Reaktion eines hydraulischen Systems auf ein Ansteuersignal ist ganz allgemein meist von Vorteil. Insbesondere ist ein schneller Druckaufbau in einer Bremsanlage günstig, weil dadurch die Sicherheit der mit mit einer solchen Bremsanlage ausgerüsteten Fahrzeugen umgehenden Personen erhöht und das Bremsgefühl verbessert wird.

Demgemäß liegt der Erfindung die Aufgabe zugrunde, ein hydraulisches Druckregelventil, insbesondere ein hydraulisches Fremdkraftbremsventil, zu entwickeln, mit dem kurze Zeiten zum Druckaufbau bis zu sehr niedrigen Enddrücken erreichbar sind.

Diese Aufgabe wird erfindungsgemäß für ein hydraulisches Druckregelventil, das die Merkmale aus dem Oberbegriff des Anspruchs 1 aufweist, dadurch gelöst, daß gemäß dem kennzeichnenden Teil des Anspruchs 1 die radiale Aussparung im Regelkolben in der ersten Endstellung des Regelkolbens symmetrisch zu dem Ventilbohrungsabschnitt zwischen dem Verbraucherkanal und dem Versorgungskanal liegt.

Die Erfindung fußt auf der Erkenntnis, daß bei den bekannten Druckregelventilen der Einfluß der Strömungskräfte bei hohen aufzubauenden Drücken gering, zu niedrigen Drücken hin jedoch nicht vernachläßigbar ist. Dies hat zur Folge, daß bei niedrigen Drücken der Regelkolben durch die Strömungskräfte aus seiner ersten Endstellung, die er aufgrund der auf ihn ausgeübten äußeren Kraft einnehmen würde, wenn keine Strömungskräfte auftreten würden, in Richtung auf die Regelstellung zu verstellt wird, so daß zwischen dem Versorgungskanal und dem - bei Einsatz als Fremdkraftbremsventil - Bremsdruckkanal nicht mehr der maximale Durchflußquerschnitt vorhanden ist. Größere äußere Kräfte, denen höhere Enddrücke entsprechen, können dagegen den Regelkolben auch gegen die Kraft der Strömungskräfte in seiner ersten Bndstellung halten, so daß die Hydraulikflüssigkeit durch einen maximalen Querschnitt zwischen dem Versorgungskanal und dem Bremsdruckkanal hindurch zu den Bremskolben fließen kann. Bei einem erfindungsgemäßen Fremdkraftbremsventil ist nun dadurch, daß die radiale Aussparung in der ersten Endstellung des Regelkolbens symmetrisch zu dem Ventilbohrungsabschnitt zwischen dem Bremsdruckkanal und dem Versorgungskanal liegt, dafür gesorgt, daß in der ersten Endstellung die Strömungskräfte auf den Regelkolben null oder nahezu null sind. Deshalb verbleibt der Regelkolben bis zu sehr niedrigen Enddrücken hin solange in seiner ersten Endstellung, bis sich im Bremsdruckkanal ein Druck aufgebaut hat, der den Regelkolben in die Regelstellung und in ein Kräftegleichgewicht bringt. Mit einem erfindungsgemäß ausgebildeten Fremdkraftbremsventil ist es gelungen, die Grenze bis zu der herab die Zeit für den Druckaufbau annähernd konstant ist, von etwa 40 bar auf 20 bar zu erniedrigen. Damit einhergehend konnte die Zeit zum Druckaufbau auf etwa 80 % bei 40 bar bis auf 30 % bei 10 bar verringert werden.

Vorteilhafte Ausgestaltungen eines erfindungsgemäßen hydraulischen Druckregelventils, insbesondere eines hydraulischen Fremdkraftbremsventils kann man den Unteransprüchen entnehmen.

Grundsätzlich gibt es bei Druckregelventilen die zwei verschiedenen Möglichkeiten, jeweils ein Paar Regelkanten zwischen dem Regelkolben und dem Versorgungskanal sowie zwischen dem Regelkolben und dem Tankkanal oder zwei Paar Regelkanten zwischen dem Regelkolben und dem Verbraucherkanal, in dem der Druck geregelt werden soll, vorzusehen. Bei der ersten Konstruktion erstreckt sich zwischen den beiden Regelkanten des Regelkolbens üblicherweise eine einzige radiale Aussparung des Regelkolbens. Bei der zweiten Konstruktion besitzt der Regelkolben, wie dies im Anspruch 2 angegeben ist, einen Kolbensteg, dessen axiale Erstreckung wenigstens annähernd der axialen Erstreckung des Verbraucherkanals entspricht und der sich in der Regelstellung des Regelkolbens mittig des Verbraucherkanals befindet. Beidseits des Kolbenstegs hat der Regelkolben jeweils eine radiale Aussparung, wobei der Verbraucherkanal über die eine Aussparung mit dem Versorgungskanal und über die andere Aussparung mit dem Tankkanal verbindbar ist. Die Aussparung, über die der Verbraucherkanal mit dem Versorgungskanal verbindbar ist, wird nun axial so lang gemacht, daß sie gemäß Anspruch 1 in der ersten Endstellung des Regelkolbens symmetrisch zu dem Ventilbohrungsabschnitt zwischen dem Verbraucherkanal und dem Versorgungskanal liegt.

Bei einem Druckregelventil wird der Druck im Verbraucherkanal auf eine Stirnseite des Regelkolbens rückgeführt und dadurch eine der äußeren Kraft entgegengerichtete Kraft auf den Regelkolben erzeugt. Gemäß Anspruch 3 geschieht die Rückführung in vorteilhafter Weise über den Regelkolben, und zwar durch eine Querbohrung im Kolbensteg und eine zur einen Stirnseite des Regelkolbens hin offene Längsbohrung im Regelkolben, in die die Querbohrung mündet.

Die oben als erste beschriebene Anordnung der Paare von Regelkanten ist bei einem hydraulischen Druckregelventil gemäß Anspruch 4 verwirklicht. Allerdings ist bei einem erfindungsgemäßen hydraulischen Druckregelventil nicht eine einzige radiale Aussparung am Regelkolben zwischen dessen beiden Regelkanten vorhanden. Vielmehr sind zwei axial hintereinanderliegende radiale Aussparungen vorgesehen, zwischen denen sich ein Kolbensteg befindet, der in den Stellungen des Regelkolbens einen Querschnitt zwischen dem Verbraucherkanal und der ersten Aussparung offen läßt. Dieser Kolbensteg besitzt keine Funktion im Hinblick auf die Verbindungen der drei Kanäle untereinander. Er ist lediglich vorhanden, um eine Aussparung am Regelkolben zu erzeugen, die in der ersten Endstellung des Regelkolbens symmetrisch zum Verbraucherkanal und zum Versorgungskanal liegt.

Um ohne kompliziert einzubringende Bohrungen am Regelkolben die Verbindung zwischen dem Verbraucherkanal und dem Tankkanal herstellen zu können, ist gemäß Anspruch 5 vorgesehen, daß die axiale Erstreckung des Kolbenstegs kleiner ist als die axiale Erstreckung des Verbraucherkanals und daß der Kolbensteg in den Stellungen des Regelkolbens einen Querschnitt zwischen dem Verbraucherkanal und der zweiten Aussparung offen läßt. Somit befindet sich der Kolbensteg in den verschiedenen Stellungen des Regelkolbens axial jeweils ganz innerhalb des Verbraucherkanals.

Zur Rückführung des Drucks im Verbraucherkanal auf eine Stirnseite des Regelkolbens bei einem Druckregelventil nach Anspruch 4 oder nach Anspruch 5 ist es günstig, wenn der Regelkolben gemäß Anspruch 6 in der zweiten Aussparung eine Querbohrung aufweist, die im Inneren des Regelkolbens in eine zur einen Stirnseite des Regelkolbens hin offene Längsbohrung mündet. Der Druck in der zweiten Aussparung des Regelkolbens entspricht auch dann dem Druck im Verbraucherkanal, wenn die Verbindung zwischen dem Versorgungskanal und dem Verbraucherkanal offen ist und eine Hydraulikflüssigkeit vom Versorgungskanal zum Verbraucherkanal strömt.

Üblicherweise ragt der Regelkolben am einen Ende aus der Ventilbohrung heraus und ist dort mit einer äußeren Kraft derart beaufschlagbar, daß die äußere Kraft ihn weiter in die Ventilbohrung hineinzuschieben sucht. Zu dem besagten Ende der Ventilbohrung hin ist eine Abdichtung zwischen dem Regelkolben und der Wand der Ventildichtung notwendig. Bei einem hydraulischen Druckregelventil nach einem der Ansprüche 4 bis 6 läßt sich nun von den drei in die Ventilbohrung mündenden Kanälen der Tankkanal am nächsten zu dem Ende der Ventilbohrung anordnen, auch wenn die äußere Kraft in die Ventilbohrung hineinwirkt. Die Abdichtung zwischen dem Tankkanal und dem außerhalb der Ventilbohrung befindlichen Raum läßt sich leicht bewerkstelligen, da allenfalls ein geringes Druckgefälle besteht.

Für den Wirkungsgrad eines hydraulischen Systems kommt es darauf an, Leckölverluste gering zu halten. Für diese Zielsetzung ist gemäß Anspruch 8 vorgesehen, daß eine der direkten Verbindung des Verbraucherkanals mit dem Versorgungskanal dienende radiale Aussparung des Regelkolbens in Umfangsrichtung des Regelkolbens begrenzt ist. Dadurch wird in der zweiten Endstellung des Druckregelventils die Dichtfläche zwischen dem Versorgungskanal und dem Verbraucherkanal gegenüber einer rundum umlaufenden radialen Aussparung vergrößert, sofern die radiale Aussparung in dieser Stellung des Regelkolbens axial unter den zwischen den beiden Kanälen befindlichen Steg des Ventilgehäuses greift.

Durch eine Ausbildung gemäß Anspruch 9 wird ein Kräfteungleichgewicht am Regelkolben in radialer Richtung vermieden. Bei einem Fremdkraftbremsventil kommt es zwischen dem Bremsdruckkanal als Verbraucherkanal und dem Tankkanal nicht so sehr auf eine hochwirksame Abdichtung an, wie zwischen dem Versorgungskanal und dem Bremsdruckkanal, da im Bremsdruckkanal jeweils nur kurzzeitig ein Druck ansteht und dieser Druck darüber hinaus auch geringer als der Druck im Versorgungskanal sein kann, so daß während eines Bremsvorgangs auftretende, geringe Ölverluste zum Tankkanal nicht ins Gewicht fallen. Deshalb kann eine zur Verbindung des Bremsdruckkanals mit dem Tankkanal dienende radiale Aussparung am Regelkolben ohne weiteres ganz um diesen herumlaufen.

Anspruch 10 schließlich bezieht sich auf ein hydraulisches Fremdkraftbremsventil, das zur Verwendung in einem Zweikreisbremssystem vorgesehen ist und das deshalb einen Primärregelkolben und einen Sekundärregelkolben besitzt. Nach Anspruch 10 besteht ein Unterschied zwischen dem Primärregelkolben und dem Sekundärregelkolben darin, daß eine der direkten Verbindung eines zugeordneten Versorgungskanals und eines zugeordneten Bremsdruckkanals dienende radiale Aussparung des Sekundärregelkolbens in axialer Richtung größer ist als eine solche radiale Aussparung des Primärregelkolbens. Auf diese Weise werden Toleranzen in der Lage der zwei Gruppen von Kanälen, in der Lage des die erste Endstellung des Sekundärregelkolbens definierenden Anschlags, in der Länge der beiden Regelkolben, usw. ausgeglichen.

Zwei Ausführungsbeispiele eines als Fremdkraftbremsventil ausgebildeten erfindungsgemäßen hydraulischen Druckregelventils sind in den Zeichnungen dargestellt. Anhand der Figuren dieser Zeichnungen wird die Erfindung nun näher erläutert.

Es zeigen
- Figur 1: ein Längsschnitt durch eine erste Ausführung, bei der sich jeweils ein Paar Regelkanten zwischen einem Regelkolben und einem Versorgungskanal bzw. einem Tankkanal befinden,
- Figur 2: einen Teilschnitt durch das Ventil nach Figur 1 senkrecht zur Zeichenebene der Figur 1, wobei sich ein Regelkolben in einer Endstellung befindet, in der der Bremsdruckkanal mit dem Versorgungskanal verbunden ist,
- Figur 3: einen Teilschnitt durch das Ventil nach Figur 1 senkrecht zur Zeichenebene der Figur 1, wobei sich ein Regelkolben in einer Regelstellung befindet,
- Figur 4: eine zweite Ausführung eines Fremdkraftbremsventils, bei der die zwei Paare von Regelkanten zwischen einem Kolbensteg und dem Bremsdruckkanal ausgebildet sind, wobei sich der Regelkolben in der Regelstellung befindet, und
- Figur 5: die Ausführung nach Figur 4 in einer Endstellung des Regelkolbens, in der der Bremsdruckkanal mit dem Versorgungskanal verbunden ist.

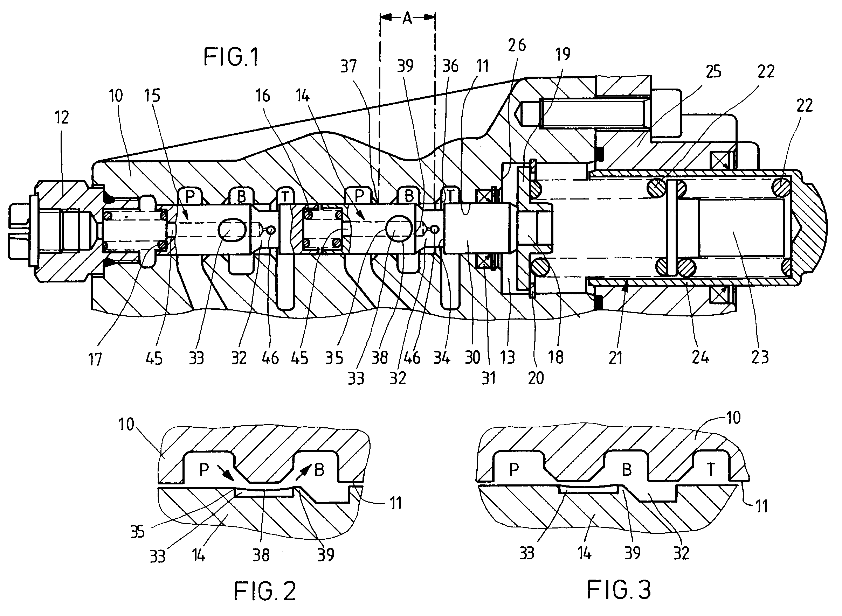

Nach Figur 1 befindet sich in einem Ventilgehäuse 10 eine Ventilbohrung 11, in die radial zwei Gruppen von Kanälen münden. Alle Kanäle sind als Ringkanäle ausgebildet, die zur Ventilbohrung 11 hin offen sind und ganz um die Ventilbohrung herumlaufen. Zu jeder Gruppe gehört ein Tankkanal T, ein Bremsdruckkanal B und ein Versorgungskanal P, in dem ein weitgehend konstanter Druck ansteht. Jeder Bremsdruckkanal ist mit einem oder mehreren Bremskolben eines Fahrzeugs und der Tankkanal ist mit einem Ölvorratsbehälter verbunden. Eine Verschlußschraube 12 verschließt die Ventilbohrung auf der einen Seite. Auf der anderen Seite mündet die Ventilbohrung 11 in einen Aufnahmeraum 13 des Gehäuses 10. Von jeder Gruppe von jeweils drei Kanälen befindet sich der Tankkanal am nächsten am Aufnahmeraum 13. Der Versorgungskanal P ist am weitesten vom Aufnahmeraum 13 entfernt. Der Bremsdruckkanal B ist zwischen dem Tankkanal T und dem Versorgungskanal P angeordnet und von letzterem durch einen Abschnitt der Ventilbohrung 11 getrennt.

In der Ventilbohrung 11 sind axial hintereinander ein Primärregelkolben 14 und ein Sekundärregelkolben 15 angeordnet. Der Primärregelkolben 14 befindet sich in einer sich an den Aufnahmeraum 13 anschließenden Hälfte der Ventilbohrung 11 und der Sekundärregelkolben 15 zwischen dem Primärregelkolben 14 und der Verschlußschraube 12. Eine zwischen den beiden Regelkolben 14 und 15 angeordnete Druckfeder 16 sucht die beiden Regelkolben voneinander wegzubewegen. Eine weitere Druckfeder 17 ist zwischen der Verschlußschraube 12 und dem Sekundärregelkolben 15 eingespannt und übt auf den Sekundärregelkolben 15 eine in Richtung auf den Primärregelkolben 14 wirkende Kraft aus. Die Steifigkeit der Feder 17 ist größer als diejenige der Feder 16.

Der Primärregelkolben 14 ragt mit einem Führungszapfen 18 in den Aufnahmeraum 13 hinein, in dem auf den Führungszapfen 18 ein Federteller 19 aufgeschoben ist. Der Federteller 19 ist zwischen der Stufe 26 zwischen der Ventilbohrung 11 und dem Aufnahmeraum 13 und einem in den Aufnahmeraum eingesetzten Sprengring 20 axial bewegbar. An ihm stützt sich eine Regelfederanordnung 21 ab, die aus zwei Schraubendruckfedern 22 und einem zwischen den beiden Schraubendruckfedern eingespannten Dorn 23 besteht. Die Regelfederanordnung 21 ist auf den größten Teil ihrer Länge von einer auf der einen Seite geschlossenen Hülse 24 umgeben, die in einem an das Gehäuse 10 angeschraubten Flansch 25 verschiebbar geführt ist. Die Stufe 26 definiert als erster Anschlag eine erste Endstellung, der Sprengring 20 als zweiter Anschlag eine zweite Endstellung des Primärregelkolbens 14.

Der Primärregelkolben 14 besitzt im Anschluß an einen Kolbenabschnitt 30, in dem der Durchmesser des Kolbens 14 dem Durchmesser der Ventilbohrung 11 entspricht und an dem eine zwischen dem Tankkanal T und dem Aufnahmeraum 13 im Gehäuse 10 gehaltene Dichtung 31 anliegt, eine umlaufende Ringnut 32. In der gezeigten, in der Ansicht nach Figur 1 rechten, zweiten Endstellung des Primärregelkolbens 14 sind der Bremsdruckkanal B und der Tankkanal T über die Ringnut 32 miteinander verbunden, die hier als zweite radiale Aussparung des Primärregelkolbens 14 angesehen wird. Vom Kolbenabschnitt 30 aus gesehen jenseits der Ringnut 32 und in einem geringen Abstand zu dieser besitzt der Primärregelkolben 14 zwei einander diametral gegenüberliegende radiale Sackbohrungen 33, die als erste radiale Aussparungen des Primärregelkolbens 14 betrachtet werden. Der Abstand zwischen der äußeren Kante 34 zwischen Ringnut 32 und Kolbenabschnitt 30 und dem am weitesten von dieser Kante 34 entfernten Punkt 35 der oberen Kante 38 einer Aussparung 33 ist nur geringfügig kleiner als der in die Figur 1 eingezeichnete Abstand A zwischen der dem Bremsdruckkanal benachbarten Kante 36 zwischen dem Tankkanal T und der Ventilbohrung 11 sowie der dem Bremsdruckkanal B benachbarten Kante 37 zwischen dem Versorgungskanal P und der Ventilbohrung 11. Die Kanten 34 und 36 bilden ein erstes Paar von Regelkanten, die obere Kante 38 einer Aussparung 33 und die Kante 37 ein zweites Paar von Regelkanten.

In der ersten Endstellung des Primärkolbens 14, in der der Federteller 19 sowohl am Primärregelkolben 14 als auch an der Stufe 26 zwischen der Ventilbohrung 11 und dem Aufnahmeraum 13 anliegt, verbinden die Aussparungen 33 den Versorgungskanal P mit dem Bremsdruckkanal B. In der zwischen den beiden Endstellungen liegenden und in Figur 3 gezeigten Regelstellung des Primärventilkolbens 14 liegen sich die Paare von Regelkanten radial gegenüber, wobei es im Hinblick auf die Regelkante 38 der Aussparung 33 auf die Lage des Punktes 35 ankommt. Um die Verbindung des Bremsdruckkanals B einmal mit dem Tankkanal T und ein andermal mit dem Versorgungskanal P herzustellen, ist es an sich nicht notwendig, daß sich die ersten Aussparungen 33 nur über einen begrenzten Teil des Umfangs des Primärkolbens 14 erstrecken und daß sie durch den durch das zwischen ihnen und der Ringnut 32 stehengebliebende Material gebildeten Kolbensteg 39 von der Ringnut 32 getrennt sind. Zur Herstellung der verschiedenen Verbindungen könnte der Primärregelkolben 14 auch eine einzige von der Kante 34 bis zum Punkt 35 reichende Ringnut besitzen.

Die Aussparungen 33 sind jedoch in Umfangsrichtung des Primärregelkolbens 14 begrenzt, um die Dichtfläche zwischen dem Versorgungskanal P und dem Bremsdruckkanal B zu vergrößern und dadurch nur eine geringe Leckölmenge fließen zu lassen. Der Kolbensteg 39, dessen axiale Erstreckung viel kleiner ist als die axiale Erstreckung des Bremsdruckkanals B, befindet sich in den beiden Endstellungen des Primärregelkolbens 14 und in allen Stellungen dazwischen jeweils innerhalb des Bremsdruckkanals B und läßt somit immer eine Verbindung zwischen diesem und der Ringnut 32 offen. Durch den Kolbensteg 39 wird erreicht, daß in der ersten Endstellung des Primärregelkolbens 14 die in Figur 2 gezeigt ist, eine radiale Aussparung des Primärregelkolbens 14, und zwar die Aussparung 33 symmetrisch zu dem Ventilbohrungsabschnitt zwischen dem Versorgungskanal P und dem Bremsdruckkanal B liegt. In einer solchen Konfiguration sind die Strömungskräfte auf den Primärregelkolben 14 wenigstens annähernd null. Dies führt zu der weiter oben schon erwähnten schnellen Reaktionszeit des Bremsdrucks auch bei niedrigen Enddrücken.

In den Primärregelkolben 14 ist von der dem Sekundärregelkolben 15 zugewandten Stirnseite her eine Längsbohrung 45 eingebracht, in die eine von der Ringnut 32 ausgehende Querbohrung 46 mündet. Über die beiden Bohrungen 45 und 46 wird in jeder Position des Primärregelkolbens 14 der im Bremsdruckkanal B herrschende Druck in den Raum zwischen den beiden Regelkolben rückgeführt. Die von diesem Druck auf den Sekundärregelkolben 15 ausgeübte Kraft ist die Eingangsgröße für die Höhe des Drucks in dem zweiten, dem Sekundärregelkolben 15 zugeordneten Bremsdruckkanal B, der auf die dem Primärregelkolben 14 abgewandte Stirnseite des Sekundärregelkolbens 15 rückgeführt ist. Der Sekundärregelkolben ist hinsichtlich der Ringnut 32, der Aussparungen 33, der Längsbohrung 45, der Querbohrung 46 ganz ähnlich wie der Primärregelkolben 14 ausgebildet. Ein Unterschied besteht lediglich darin, daß seine Aussparungen 33 in Achsrichtung des Sekundärregelkolbens 15 leicht länglich ausgebildet sind, also eine größere axiale Erstreckung als die Aussparungen 33 des Primärregelkolbens 14 hat. Dadurch werden Toleranzen ausgeglichen.

Die in Figur 1 gezeigte zweite Endstellung des Primärregelkolbens 14 ist durch den Sprengring 20 definiert. Die zweite Endstellung des Sekundärregelkolbens 15 ergibt sich durch ein Gleichgewicht zwischen dem Druckfedern 16 und 17. In der zweiten Endstellung besitzt der Sekundärregelkolben 15 einen geringen axialen Abstand vom Primärregelkolben 14. Wird nun die Hülse 24 bis zu einer bestimmten Position soweit niedergedrückt, daß der Federteller gegen das Gehäuse 10 stößt, so befindet sich der Primärregelkolben 14 in seiner ersten Endstellung, die in Figur 2 gezeigt ist. Im Bremsdruckkanal B steigt der Druck an. Der Druck steigt auch in dem Raum zwischen den beiden Regelkolben an, so daß der Sekundärregelkolben 15 bis gegen die seine erste Endstellung definierende Verschlußschraube 12 gedrückt wird, in der die Aussparungen 33 des Sekundärregelkolbens 15 symmetrisch zu einem sich zwischen dessen Versorgungskanal P und Bremsdruckkanal B befindlichen Ventilbohrungsabschnitt liegen. Sobald die Drücke bei der gegebenen Position der Hälse 24 der Kraft der Regelfederanordnung 21 entsprechen, werden die Regelkolben 14 und 15 in die Regelstellungen geschoben, wobei der Federteller mitwandert und dabei, vorausgesetzt die Hälse 24 verbleibt in Ruhe, die äußere Kraft und der Druck in den Bremsdruckkanälen auf einen Endwert ansteigen. Der Druck in den Bremsdruckkanälen B bleibt nun auf dem erreichten Niveau. Nach einer Entlastung der Hülse 24 kehren die Regelkolben 15 unter der Wirkung der auf sie wirkenden, abfallenden Drücke und der Druckfedern 16 und 17 wieder in die in Figur 1 gezeigte zweite Endstellung zurück.

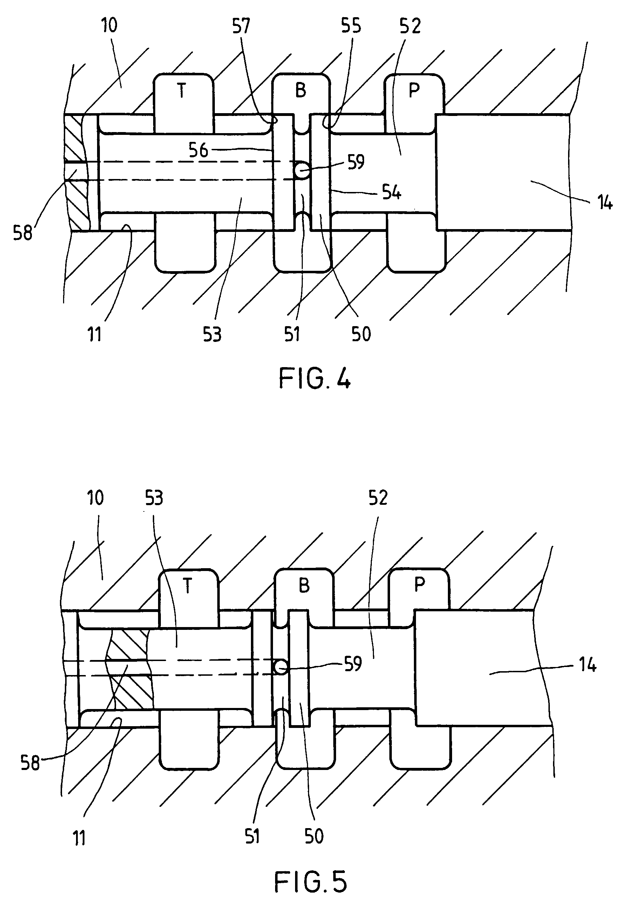

Bei der Ausführung nach den Figuren 4 und 5 besitzt ein Regelkolben, es sei der Regelkolben 14 einen Kolbensteg 50, der in seiner axialen Erstreckung derjenigen des Bremsdruckkanals B entspricht und der mittig durch eine schmale Ringnut 51 unterbrochen ist. Auf der einen Seite des Kolbenstegs 50 ist eine erste Ringnut 52 und auf der anderen Seite des Kolbenstegs 50 eine zweite Ringnut 53 angeordnet. Der Bremsdruckkanal B ist über die Ringnut 52 direkt mit dem Versorgungskanal P und über die Ringnut 53 direkt mit dem Tankkanal T verbindbar. In der Regelstellung des Regelkolbens 14, die in Figur 4 gezeigt ist, liegen sich zwei Paare von Regelkanten 54 und 55 bzw. 56 und 57 am Kolbensteg 50 und zwischen dem Bremsdruckkanal B und der Ventilbohrung 11 radial gegenüber. In der ersten Endstellung des Ventilkolbens 14, die in Figur 5 gezeigt ist, besteht zwischen dem Versorgungskanal P und dem Bremsdruckkanal B über die Ringnut 52 eine Verbindung, wobei die Ringnut 52 symmetrisch zu dem zwischen den beiden genannten Kanälen befindlichen Ventilbohrungsabschnitt liegt. Dadurch ist wiederum erreicht, daß in der ersten Endstellung die auf den Regelkolben 14 ausgeübten Strömungskräfte wenigstens annähernd null sind.

Zur Rückführung des Drucks im Bremsdruckkanal B auf eine Stirnseite des Regelkolbens 14 besitzt dieser eine zu der genannten Stirnseite hin offene Längsbohrung 58 und eine in diese mündende Querbohrung 59, die von der Ringnut 51 ausgeht. Zum Abbau des Druckes im Bremsdruckkanal B wird der Regelkolben 14 nach einer Entlastung von äußeren Kräften nach, gemäß Figur 4 betrachtet, rechts in eine zweite Endstellung bewegt, so daß der Bremsdruckkanal B über die Ringnut 53 mit dem Tankkanal T verbunden ist.

## Patentansprüche

1. Hydraulisches Druckregelventil, insbesondere hydraulisches Fremdkraftbremsventil, mit einer in einem Ventilgehäuse (10) vorhandenen Ventilbohrung (11), in die in einem axialen Abstand zueinander ein Versorgungskanal (P), ein Tankkanal (T) und und ein zwischen dem Versorgungskanal (P) und dem Tankkanal (T) angeordneter Verbraucherkanal (B), zwischen dem und dem Versorgungskanal (P) sich ein Ventilbohrungsabschnitt befindet, münden, und mit einem in der Ventilbohrung (11) angeordneten und eine radiale Aussparung (33, 52) aufweisenden Regelkolben (14, 15), der in eine erste Richtung in eine durch einen Anschlag (26, 12) definierte erste Endstellung, in der der Verbraucherkanal (B) über die radiale Aussparung (33, 52) direkt mit dem Versorgungskanal (P) verbunden ist, und in eine zweite Richtung in eine zweite Endstellung verstellbar ist, in der der Verbraucherkanal (B) mit dem Tankkanal (T) verbunden ist, und der dazwischen eine Regelstellung einnehmen kann, **dadurch gekennzeichnet,** daß die radiale Aussparung (33, 52) im Regelkolben (14, 15), in der ersten Endstellung des Regelkolbens (14, 15) symmetrisch zu dem Ventilbohrungsabschnitt zwischen dem Verbraucherkanal (B) und dem Versorgungskanal (P) liegt.

2. Hydraulisches Druckregelventil nach Anspruch 1, **dadurch gekennzeichnet**, daß der Regelkolben (14) einen Kolbensteg (50) aufweist, dessen axiale Erstreckung wenigstens annähernd der axialen Erstreckung des Verbraucherkanals (B) entspricht, daß sich beidseits des Kolbenstegs (50) jeweils eine radiale Aussparung (52, 53) im Regelkolben (14) befindet und daß der Verbraucherkanal (B) über die eine Aussparung (52) mit dem Versorgungskanal (P) und über die andere Aussparung (53) mit dem Tankkanal (T) verbindbar ist.

3. Hydraulisches Druckregelventil nach Anspruch 2, **dadurch gekennzeichnet**, daß der Regelkolben (14) in dem Kolbensteg (50) eine Querbohrung (59) aufweist, die eine zur einen Stirnseite des Regelkolbens (14) hin offene Längsbohrung (58) im Regelkolben (14) mit dem Verbraucherkanal (B) verbindet.

4. Hydraulisches Druckregelventil nach Anspruch 1, **dadurch gekennzeichnet**, daß ein Paar Regelkanten (37, 38) zwischen einer ersten radialen Aussparung (33) am Regelkolben (14, 15) und dem Versorgungskanal (P) und ein Paar Regelkanten (34, 36) zwischen einer zweiten axial vor der ersten Aussparung (33) liegenden radialen Aussparung (32) und dem Tankkanal (T) vorhanden sind, und daß sich zwischen den beiden Aussparungen (32, 33) ein Kolbensteg (39) befindet, der in den Stellungen des Regelkolbens (14, 15) einen Querschnitt zwischen dem Verbraucherkanal (B) und der ersten Aussparung (33) offen läßt.

5. Hydraulisches Druckregelventil nach Anspruch 4, **dadurch gekennzeichnet**, daß die axiale Erstreckung des Kolbenstegs (39) kleiner ist als die axiale Erstreckung des Verbraucherkanals (B) und daß der Kolbensteg (39) in den Stellungen des Regelkolbens (14, 15) einen Querschnitt zwischen dem Verbraucherkanal (B) und der zweiten Aussparung (32) offen läßt.

6. Hydraulisches Druckregelventil nach Anspruch 5, **dadurch gekennzeichnet**, daß der Regelkolben (14, 15) in der zweiten Aussparung (32) eine Querbohrung (46) aufweist, die im Inneren des Regelkolbens (14, 15) in eine zur einen Stirnseite des Regelkolbens (14, 15) hin offene Längsbohrung (45) mündet.

7. Hydraulisches Druckregelventil nach einem der Ansprüche 4 bis 6, **dadurch gekennzeichnet**, daß am einen Ende der Ventilbohrung (11) der Regelkolben (14) über eine Regeldruckfederanordnung (21) von einer äußeren Kraft beaufschlagbar ist und daß von den drei in die Ventilbohrung (11) mündenden Kanälen (P, B, T) der Tankkanal (T) am nächsten zu dem Ende der Ventilbohrung (11) angeordnet ist.

8. Hydraulisches Druckregelventil nach einem vorhergehenden Anspruch, **dadurch gekennzeichnet**, daß eine der direkten Verbindung des Verbraucherkanals (B) mit dem Versorgungskanal (P) dienende radiale Aussparung (33) des Regelkolbens (14, 15) in Umfangsrichtung des Regelkolbens (14, 15) begrenzt ist.

9. Hydraulisches Druckregelventil nach Anspruch 8, **dadurch gekennzeichnet**, daß zwei gleiche der direkten Verbindung des Verbraucherkanais (B) mit dem Versorgungskanal (P) dienende radiale Aussparungen (33) vorhanden sind, die sich am Regelkolben (14, 15) diametral gegenüberliegen.

10. Hydraulisches Fremdkraftbremsventil nach einem vorhergehenden Anspruch, **dadurch gekennzeichnet**, daß sich in der Ventilbohrung (11) hintereinander ein Primärregelkolben (14) und ein Sekundärregelkolben (15) befinden und jedem Regelkolben (14, 15) ein anderer Versorgungskanal (P), Bremsdruckkanal (B) und Tankkanal (T) zugeordnet ist, daß der Primärregelkolben (14) in eine erste Richtung von einer Regeltederanordnung (21) beaufschlagt ist, daß ein Zwischenraum zwischen den beiden Regelkolben (14, 15) vom Druck im dem Primärregelkolben (14) zugeordneten Bremsdruckkanal (B) beaufschlagbar ist, daß der Sekundärregelkolben (15) auf der dem Zwischenraum abgewandten Stirnseite vom Druck in dem ihm zugeordneten Bremsdruckkanal (B) beaufschlagbar ist und daß eine der direkten Verbindung eines zugeordneten Versorgungskanals (P) und Bremsdruckkanals (B) dienende radiale Aussparung (33) des Sekundärregelkolbens (15) in axialer Richtung größer ist als eine solche radiale Aussparung (33) des Primärregelkolbens (14).

11. Hydraulisches Druckregelventil nach einem vorhergehenden Anspruch, **dadurch gekennzeichnet**, daß zumindest der Versorgungskanal (P) und der Verbraucherkanal (B) als zur Ventilbohrung (11) hin offene Ringkanäle ganz um die Ventilbohrung (11) herumlaufen.

## Claims

1. A hydraulic pressure control valve, in particular a power brake valve, having a valve bore (11) which is present in a valve housing (10) and into which debouch, at an axial distance from each other, a supply channel (P), a tank channel (T) and, arranged between the supply channel (P)and the tank channel (T), a load channel (B) between which and the supply channel (P) lies a section of the valve bore, and having a control piston (14, 15) provided with a radial recess (33, 52), which piston is arranged in the valve bore (11) and which can be displaced in a first direction into a first end position defined by a stop (26, 12) in which the load channel (B) is connected via the radial recess (33, 52) directly with the supply channel (P), and in a second direction into a second end position in which the load channel (B) is connected with the tank channel (T) and which can assume a control position between these two end positions, **characterized in that**, in the first end position of the control piston (14, 15) the radial recess (33, 52) in the control piston (14, 15) lies symmetrical to the valve bore section between the load channel (B) and the supply channel (P).

2. A hydraulic pressure control valve according to Claim 1, **characterized in that** the control piston (14) has a piston strap (50) the axial length of which corresponds at least approximately to the axial length of the load channel (B); that a radial recess (52, 53) is present in the control piston (14) on both sides of the piston strap (50); and that the load channel (B) can be connected with the supply channel (P) via the one recess (52) and with the tank channel (T) via the other recess (53).

3. A hydraulic pressure control valve according to Claim 2, **characterized in that** the control piston (14) is provided in the piston strap (50) with a transverse bore (59) which connects a longitudinal bore (58) in the control piston (14) which bore is open towards an end of the control piston (14) with the load channel (B).

4. A hydraulic pressure control valve according to Claim 1, **characterized in that** a pair of control edges (37, 38) are present between a first radial recess (33) on the control piston (14, 15) and the supply channel (P) and a pair of control edges (34, 36) are present between a second radial recess (32) which lies axially in front of the first recess (33) and the tank channel (T); and that between the two recesses (32, 33) there is a piston strap (39) which, in the positions of the control piston (14, 15) leaves a cross section open between the load channel (B) and the first recess (33).

5. A hydraulic pressure control valve according to Claim 4, **characterized in that** the axial length of the piston strap (39) is less than the axial length of the load channel (B); and that the piston strap (39), in the positions of the control piston (14, 15), leaves a cross section open between the load channel (B) and the second recess (32).

6. A hydraulic pressure control valve according to Claim 5, **characterized in that** the control piston (14, 15), in the second recess (32), has a transverse bore (46) which debouches within the control piston (14, 15) into a longitudinal bore (45) which is open towards one end of the control piston (14, 15).

7. A hydraulic pressure control valve according to any of Claims 4 to 6, **characterized in that** at one end of the valve bore (11) the control piston (14) can be acted on by an external force via a control pressure spring arrangement (21); and that of the three channels (P, B, T) debouching into the valve bore (11), the tank channel (T) is arranged closest to that end of the valve bore (11).

8. A hydraulic pressure control valve according to a preceding claim, **characterized in that** a radial recess (33) in the control piston (14, 15) which serves for the direct connection of the load channel (B) with the supply channel (P) is limited in the circumferential direction of the control piston (14, 15).

9. A hydraulic pressure control valve according to Claim 8, **characterized in that** two identical radial recesses (33) serving for the direct connection of the load channel (B) with the supply channel (P) are present, they being diametrically opposite each other on the control piston (14, 15).

10. A hydraulic power brake valve according to a preceding claim, **characterized in that**, within the valve bore (11), a primary control piston (14) and a secondary control piston (15) are arranged one behind the other, and that another supply channel (P), brake pressure channel (B) and tank channel (T) is associated with each control piston (14, 15); that the primary control piston (14) is acted on in a first direction by a control spring arrangement (21); that a space between the two control pistons (14, 15) can be acted on by the pressure in the brake pressure channel (B) associated with the primary control piston (14); that the secondary control piston (15) can be acted on by the pressure in the brake pressure channel (B) associated with it on the end facing away from the space; and that a radial recess (33) in the secondary control piston (15) which recess serves for the direct connection of an associated supply channel (P) and brake pressure channel (B) is larger in axial direction than such a radial recess (33) in the primary control piston (14).

11. A hydraulic pressure control valve according to a preceding claim, **characterized in that** at least the supply channel (P) and the load channel (B) extend as annular channels open towards the valve bore (11) entirely around the valve bore (11).

## Revendications

1. Une valve de régulation de pression hydraulique, en particulier une valve hydraulique de freinage d'une force externe, dotée d'un alésage (11) de valve présent à l'intérieur d'un corps (10) de valve, où débouchent, à une certaine distance axiale les uns des autres, un canal (P) d'alimentation, un canal (T) de réservoir et un canal (B) de récepteur, lequel est disposé entre le canal (P) d'alimentation et le canal (T) de réservoir de telle façon, qu'une section d'alésage de valve est présente entre lui et le canal (P) d'alimentation, et dotée d'un tiroir (14, 15) de régulation, qui est disposé dans l'alésage (11) de valve, qui présente une entaille (33, 52) radiale, qui peut être amené à coulisser dans un premier sens jusqu'à atteindre une première position finale, laquelle est définie par une butée (26, 12) et pour laquelle le canal (B) de récepteur est directement raccordé au canal (P) d'alimentation par l'entaille (33, 52) radiale, qui peut être amené à coulisser dans un second sens jusqu'à atteindre une seconde position finale, pour laquelle le canal (B) de récepteur est raccordé au canal (T) de réservoir, et qui entre ces deux positions finales peut faire de la régulation en position, **caractérisée en ce** que, pour la première position finale du tiroir (14, 15) de régulation, l'entaille radiale (33, 52) du tiroir (14, 15) de régulation est placée de façon symétrique par rapport à la section d'alésage de valve entre le canal (B) de récepteur et le canal (P) d'alimentation.

2. Une valve de régulation de pression hydraulique conforme à la revendication n° 1 **caractérisée en ce que** le tiroir (14) de régulation présente une entretoise (50) de tiroir, dort l'étendue axiale correspond au moins à peu près à l'étendue axiale du canal (B) de récepteur, que de chaque côté de l'entretoise (50) de tiroir se trouve une entaille (52, 53) radiale dans le tiroir (14) de régulation et que le canal (B) de récepteur peut être raccordé au canal (P) d'alimentation par l'une des entailles (52) et au canal (T) de réservoir par l'autre entaille (53).

3. Une valve de régulation de pression hydraulique conforme à la revendication n° 2, **caractérisée en ce que** le tiroir (14) de régulation présente dans l'entretoise (50) de tiroir un forage (59) perpendiculaire, qui raccorde le canal (B) de récepteur avec un forage (58) en longueur dans le tiroir (14) de régulation, lequel est ouvert sur une des faces du tiroir (14) de régulation.

4. Une valve de régulation de pression hydraulique conforme à la revendication n° 1, **caractérisée en ce que** une paire d'arêtes (37, 38) de régulation est présente entre une première entaille (33) radiale dans le tiroir (14, 15) de régulation et le canal (P) d'alimentation et une paire d'arêtes (34, 36) de régulation est présente entre une seconde entaille (32) radiale, laquelle est positionnée avant la première entaille (33) radiale dans le sens de l'axe, et le canal (T) de réservoir, et qu'entre les deux entailles (32, 33 ) radiales se trouve une entretoise (39) de tiroir, qui dans les positions de régulation du tiroir (14, 15) de régulation laisse ouverte une section entre le canal (B) de récepteur et la première entaille (33).

5. Une valve de régulation de pression hydraulique conforme à la revendication n° 4, **caractérisée en ce que** l'extension axiale de l'entretoise (39) est inférieure à l'extension axiale du canal (B) de récepteur et que, dans les positions du tiroir (14, 15) de régulation, l'entretoise (39) laisse ouverte une section entre le canal (B) de récepteur et la seconde entaille (32).

6. Une valve de régulation de pression hydraulique conforme à la revendication n° 5, **caractérisée en ce que,** dans la seconde entaille (32), le tiroir (14, 15) de régulation présente un forage (46) perpendiculaire, qui débouche à l'intérieur du tiroir (14, 15) de régulation dans un forage (45) longitudinal ouvert sur l'une des faces du tiroir (14, 15) de régulation.

7. Une valve de régulation de pression hydraulique conforme à une des revendications n° 4 à n° 6, **caractérisée en ce que,** à l'une des extrémités du forage (11) de valve, le tiroir (14) de régulation peut être soumis à l'effet d'une force externe au travers d'un dispositif (21) de ressorts de pression, et que, des trois canaux (P, B, T) débouchant dans le forage (11) de valve, le canal (T) de réservoir est disposé le plus près de cette extrémité du forage (11) de valve.

8. Une valve de régulation de pression hydraulique conforme à une revendication précédente, **caractérisée en ce que** une entaille (33) radiale du tiroir (14, 15) de valve, qui sert au raccordement direct du canal (B) de récepteur au canal (P) d'alimentation, est limitée dans la direction périphérique du tiroir (14, 15) de régulation.

9. Une valve de régulation de pression hydraulique conforme à la revendication n° 8, **caractérisée en ce que** sont présentes deux entailles (33) radiales identiques, qui servent au raccordement direct du canal (B) de récepteur au canal (P) d'alimentation et qui sont disposées diamétralement opposées au niveau du tiroir (14, 15) de régulation.

10. Une valve hydraulique de freinage d'une force externe conforme à une revendication précédente, **caractérisée en ce que** un tiroir (14) de régulation primaire et un tiroir (15) de régulation secondaire se trouvent l'un derrière l'autre dans le forage (11) de valve et chacun des tiroirs (14, 15) de régulation est doté d'un canal d'alimentation (P), d'un canal pression de freinage (B) et d'un canal de réservoir (T) lui étant dédiés, que le tiroir (14) de régulation primaire est sollicité par un dispositif (21) de ressorts de régulation dans un premier sens, qu'un interstice entre les deux tiroirs (14, 15) de régulation peut être soumis à la pression régnant dans le canal (B) de pression de freinage dédié au tiroir (14) de régulation primaire, que le tiroir (15) de régulation secondaire peut être soumis sur sa face opposée à l'interstice à la pression régnant dans le canal (B) de pression de freinage lui étant dédié, et qu'une entaille (33) radiale du tiroir (15) de régulation secondaire, servant au raccordement direct de canaux d'alimentation (P) et de pression de freinage (B) lui étant dédiés, a une extension dans la direction axiale supérieure à celle d'une entaille (33) radiale similaire du tiroir (14) de régulation primaire.

11. Une valve de régulation de pression hydraulique conforme à une revendication précédente, **caracterisée en ce que** au moins le canal (P) d'alimentation et le canal (B) de récepteur font un tour complet du forage (11) de valve, sous forme de conduites annulaires ouvertes sur le forage (11) de valve.
